# FASCICULE DE BREVET EUROPEEN

(11) **EP 2 823 698 B1**
(45) Date de publication et mention de la délivrance du brevet: **21.09.2016**
(21) Numéro de dépôt: 14176272.4
(22) Date de dépôt: 09.07.2014
(51) Int. Cl.: A01B 59/06, A01D 87/12, A01B 71/06

(54) **Porte-outil destiné à être attelé à un engin pour porter un accessoire**
Werkzeughalter zur Befestigung an einer Maschine zur Aufnahme eines Zubehörteils
Tool-holder intended for being fastened to a machine for supporting an accessory

(30) Priorité: 10.07.2013 FR 1356784
(43) Date de publication de la demande: 14.01.2015
(73) Titulaire: Etablissements Emily, 29800 Treflevenez (FR)
(72) Inventeur: Emily, Michel, 29800 Treflevenez (FR); Miossec, Arnaud, 29440 Plouzevede (FR); Guengant, Michel, 29440 Plougar (FR)
(74) Mandataire: Le Guen-Maillet

(56) Documents cités:
- WO-A1-2004/077928
- FR-A1- 2 817 114
- FR-A1- 2 883 698
- US-A- 4 176 727
- US-A- 4 886 409
- US-A- 5 423 394

## Description

La présente invention se rapporte à un châssis porte-outil destiné à être attelé à un engin de levage pour porter et faire fonctionner au moins un organe d'un accessoire.

Un tel accessoire peut prendre la forme d'une dérouleuse utilisée dans le domaine agricole, pour distribuer par déroulage une botte de fourrage dans une stabulation, dans une mangeoire. Une botte de fourrage enroulée se présente en principe sous la forme d'un cylindre. Pour la distribuer on peut, soit la défragmenter avec une pailleuse, soit la dérouler avec une dérouleuse. Ces deux fonctions peuvent être incluses dans une même machine baptisée dérouleuse/pailleuse.

Pour charger une dérouleuse, il est connu d'utiliser un bras que comporte la machine et de l'étendre sur le sol. On fait glisser ce bras sous la botte, puis on le relève et la botte roule sur un organe de déroulement constitué généralement d'un convoyeur à tasseaux circulant en boucle, où elle peut être déroulée dans la machine pour être distribuée en étant éparpillée. Lorsque la botte est stockée empilée, on peut aussi se servir d'un chargeur pourvu d'une pince que l'on utilise pour la déposer sur le bras étendu de la dérouleuse.

Pour éviter d'utiliser une pince et pour gagner du temps, il est connu également d'utiliser un châssis porte-outil communément appelé « pique-botte » et qui se présente sous la forme d'un tablier attelé sur le bras de levage dont est pourvu l'engin porteur et qui comprend deux doigts et un moteur hydraulique avec un crabot d'entraînement. La paire de doigts sert, d'une part, à piquer la botte pour la déposer sur la dérouleuse et, d'autre part, à porter le châssis de la machine. Le temps de chargement s'en trouve réduit. L'attelage est réalisé par une barre horizontale portée par le châssis porte-outil et qui est capable de soulever deux crochets solidaires du châssis de la machine alors que le tablier est légèrement incliné en arrière, puis par un mouvement de basculement dudit tablier en avant vers un plan vertical, les doigts sont placés sous le châssis pour le porter et le crabot du moteur hydraulique est alors accouplé avec un crabot correspondant capable d'entraîner un arbre du convoyeur à tasseaux. Ce type de « pique-botte » fonctionne uniquement sur le bras d'un engin pourvu d'un moyen d'inclinaison capable de faire pivoter le tablier.

Un châssis porte-outil capable d'être attelé au système de relevage arrière à trois points est aussi connu. Le tablier solidaire du système de relevage, sans faculté de basculement, est attelé sur le châssis de la dérouleuse par rapprochement horizontal. Les doigts sont enfilés dans des fourreaux disposés sous le châssis, puis les deux crabots sont accouplés par un positionnement coplanaire. Un verrou retient la dérouleuse sur le tablier pour éviter qu'elle ne se décroche par simple recul.

On connaît encore à la lecture du document FR-A1-2 883 698, un dispositif d'attelage permettant d'atteler un outil à un véhicule. Ce dispositif comprend au moins un bras pivotant actionné par des moyens d'actionnement prévus à cet effet, et une plaque d'attelage normalisée dite "SETRA" et qui est montée pivotante sur l'extrémité libre de chaque bras. Le dispositif comprend encore des moyens de positionnement de la plaque d'attelage par rapport à chaque bras permettant, soit de placer cette plaque dans une position angulaire fixe par rapport à chaque bras au long de la course de pivotement de ce bras, soit de permettre un pivotement de cette plaque par rapport à chaque bras afin de permettre une translation de la plaque au long de cette même course de pivotement.

Compte tenu de cet état de la technique, le demandeur a cherché une solution pour concevoir un porte-outil destiné à être solidarisé à un engin de levage, qui puisse être plus simple à accoupler avec un accessoire, qu'il soit monté sur le bras de levage d'un engin ou sur le système de relevage à trois points d'un tracteur. Un accessoire correspondant, tel qu'une dérouleuse, une dérouleuse/pailleuse, fait aussi partie de l'invention.

A cet effet, est proposé un porte-outil destiné à être attelé à un engin pour porter un accessoire et faire fonctionner au moins un organe dudit accessoire, comprenant un moyen d'accouplement avec ledit accessoire, le moyen d'accouplement incluant un attelage mécanique capable de fixer l'accessoire sur le porte-outil pour qu'il puisse être porté par celui-ci, un moyen d'entraînement capable de faire fonctionner ledit organe de l'accessoire; selon l'invention, le moyen d'entraînement comprend au moins un moteur adapté pour faire tourner un engrenage porté par ledit porte-outil et destiné à coopérer avec un engrenage de l'accessoire à l'issue de l'attelage mécanique par soulèvement du porte-outil.

L'accouplement avec l'accessoire, pour que le porte-outil puisse le faire fonctionner, est ainsi obtenu pendant le simple mouvement de soulèvement du porte-outil. Le désaccouplement est mis en oeuvre par le mouvement inverse d'abaissement du porte-outil.

Selon une caractéristique additionnelle de l'invention, le moyen d'accouplement inclut un moyen de guidage vis-à-vis de l'accessoire et qui comprend une paroi de guidage dont la direction de guidage vis-à-vis de l'accessoire est perpendiculaire à celle de l'axe dudit engrenage et qui agit, pendant l'attelage, la paroi de guidage formant aussi une butée d'appui pour l'accessoire à l'issue de son attelage.

Le moyen de guidage positionne correctement l'engrenage du porte-outil vis-à-vis de l'accessoire et lui sert de butée sur laquelle il peut prendre appui en étant attelé.

Selon une caractéristique additionnelle de l'invention, l'attelage mécanique comprend deux crochets coopérant avec la paroi de guidage qui est positionnée sous les deux crochets.

L'accessoire peut être suspendu et positionné par les deux crochets et en étant maintenu en appui sur la paroi de guidage.

Selon une caractéristique additionnelle de l'invention, les deux crochets sont respectivement fixés sur deux flasques constitutifs du châssis du porte-outil et la paroi de guidage est constituée de deux rebords constitutifs de la paire de flasques.

Les deux flasques constitutifs du châssis peuvent ainsi porter l'accessoire.

Selon une caractéristique additionnelle de l'invention, le moteur est un moteur hydraulique. Il peut être alimenté et commandé par l'engin porteur.

Avantageusement, le moteur est monté à l'arrière d'une plaque constitutive du châssis du porte-outil et dont l'arbre dudit moteur traverse ladite plaque et supporte ledit engrenage disposé de l'autre côté de ladite plaque.

L'engrenage est tourné en direction de l'accessoire à accoupler.

Avantageusement, le moteur est fixé sur une contreplaque assemblée à l'arrière de la plaque et qui est maintenue plaquée contre elle par l'intermédiaire d'un moyen de rappel, tel qu'au moins un ressort.

Ce montage flottant du moteur protège l'arbre de celui-ci, des chocs éventuels appliqués sur l'engrenage qu'il porte.

Selon une caractéristique additionnelle de l'invention, la denture de l'engrenage est du type à axe parallèle. Ce choix convient pour engrener l'engrenage avec un autre du même type pendant le mouvement de levage du porte-outil.

Selon une caractéristique additionnelle de l'invention, au moins un doigt est solidaire du châssis et qui est disposé de sorte à pouvoir piquer une botte pour pouvoir la transporter, par exemple, dans un accessoire.

Un porte-outil associé à un accessoire fait également partie de l'invention. L'accessoire qui lui est associé est une dérouleuse de bottes de fourrage ou une dérouleuse/pailleuse de bottes de fourrage.

Selon une caractéristique additionnelle de l'invention, la dérouleuse, la dérouleuse/pailleuse, comprend au moins un flanc, un engrenage disposé sur la face extérieure dudit flanc pour entraîner un organe de l'accessoire, deux axes solidaires dudit flanc pour respectivement coopérer avec les deux crochets porteurs du porte-outil.

L'accessoire est accouplé pendant le levage du porte-outil. Il est ainsi attelé au porte-outil et il peut être entraîné par celui-ci.

Avantageusement, la dérouleuse, la dérouleuse/pailleuse est pourvue d'un second flanc et un autre engrenage est disposé sur la face extérieure de l'autre flanc pour entraîner ledit organe, deux axes étant solidaires dudit autre flanc pour coopérer avec les deux crochets.

L'accessoire peut alors être attelé et porté indifféremment par l'un ou l'autre de ses flancs pour sortir la matière du côté droit ou du côté gauche par rapport à l'engin porteur.

Selon une caractéristique additionnelle de l'invention, deux embrèvements creusent le bord inférieur d'au moins un flanc de la dérouleuse, de la dérouleuse/pailleuse, pour y réceptionner respectivement deux doigts dont est pourvu le porte-outil.

Les doigts du porte-outil aident à porter l'accessoire.

Selon une caractéristique additionnelle de l'invention, une butée est fixée sur ledit ou chaque flanc de la dérouleuse, la dérouleuse/pailleuse, et qui est pourvu de l'attelage mécanique, la butée étant positionnée à l'extérieur des deux axes, en étant conformée pour prendre appui sur une barre dont est pourvu le châssis du porte-outil, pour accroître la stabilité de l'attelage.

Selon une caractéristique additionnelle de l'invention, le porte-outil comprend un verrou adapté pour bloquer l'accessoire dans sa position d'attelage sur le porte-outil.

Un procédé d'accouplement d'un porte-outil avec un accessoire fait aussi partie de l'invention. Le porte-outil est destiné à être attelé à un engin pour porter l'accessoire et faire fonctionner au moins un organe dudit accessoire, le porte-outil comprenant un moyen d'accouplement avec ledit accessoire, le moyen d'accouplement comprenant un attelage mécanique capable de fixer l'accessoire sur le porte-outil pour qu'il puisse être porté par celui-ci, au moins un moteur adapté pour faire tourner un engrenage porté par ledit porte-outil. Selon l'invention, le procédé consiste à soulever le porte-outil de sorte à atteler l'accessoire grâce à l'attelage mécanique et à engrener l'engrenage avec un autre engrenage porté par l'accessoire.

L'accessoire peut être entraîné par le porte-outil à l'issue de son attelage.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1a représente une vue en perspective avant d'un porte-outil destiné à être solidarisé à un engin de levage selon l'invention,
la Fig. 1b représente une vue en perspective arrière d'un porte-outil destiné à être solidarisé à un engin de levage selon l'invention,
la Fig. 2 représente une vue en perspective d'une dérouleuse de fourrage destinée à être accouplée et portée par un porte-outil selon l'invention,
la Fig. 3a représente une vue schématique d'un porte-outil en cours d'approche vers une dérouleuse selon l'invention,
la Fig. 3b représente une vue schématique d'un porte-outil en cours d'élévation sous une dérouleuse selon l'invention,
la Fig. 3c représente une vue schématique d'un porte-outil accouplé avec une dérouleuse selon l'invention et,
la Fig. 4 représente une vue en perspective d'un porte-outil accouplé avec une dérouleuse selon l'invention.

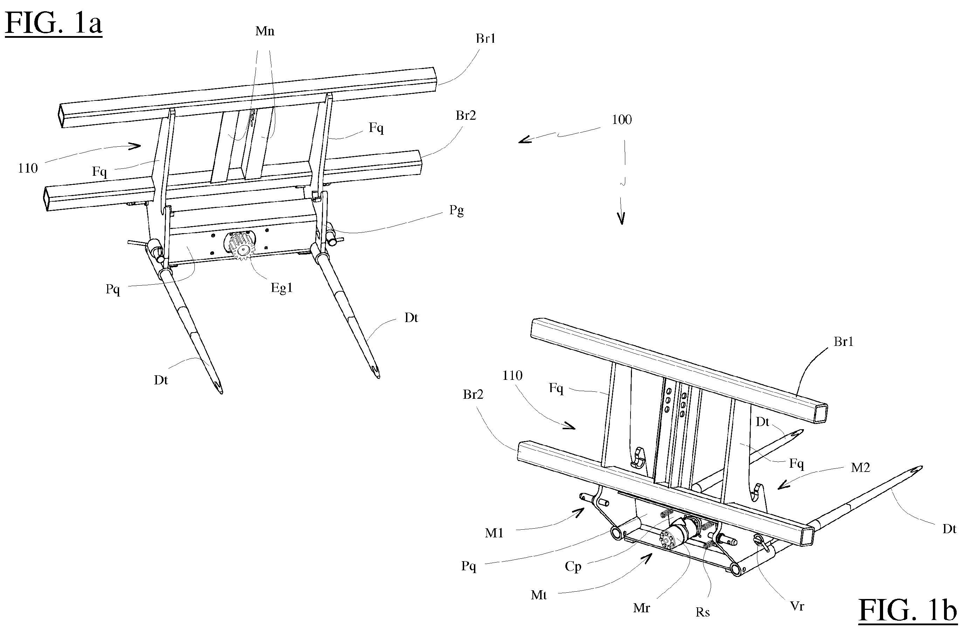

Le porte-outil 100, présenté sur les Figs. 1, est destiné à être attelé à un engin pour porter et faire fonctionner un accessoire. Il est présenté dans sa position normale d'utilisation. L'engin est par exemple pourvu d'un bras de levage à l'extrémité duquel il convient de fixer le porte-outil, un tracteur dont le système de relevage hydraulique à trois points sert à fixer ledit porte-outil.

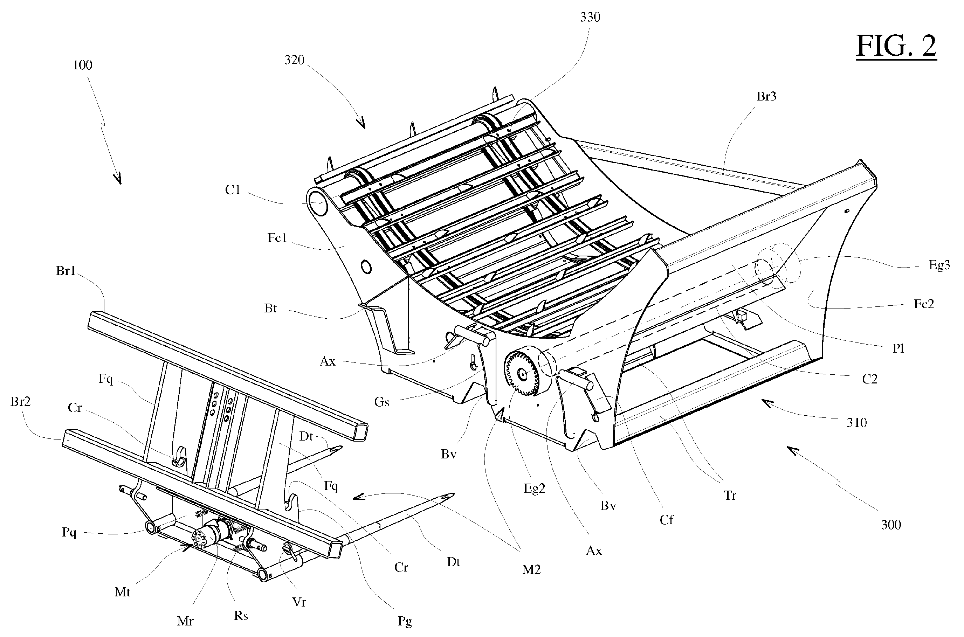

Sur la Fig. 2, l'accessoire 300 est une dérouleuse, utilisée pour réceptionner une botte de fourrage (par exemple de foin, de paille) formée par enroulement, pour la distribuer par déroulage à l'aide d'un organe de déroulement dont est pourvue la machine, comme cela est expliqué dans la suite de cette description. Elle est présentée dans sa position normale d'utilisation, c'est-à-dire reposant sur le sol pour être attelée avec le porte-outil.

Sur les Figs. 1, le porte-outil 100 comprend un châssis 110 supportant au moins un doigt Dt destiné à piquer une botte pour pouvoir la porter dans la dérouleuse, au moins une barre Br pare-botte horizontale formant, notamment, une butée pour celle-ci, au moins un moyen d'attelage M1 avec l'engin porteur, un moyen d'accouplement M2 avec l'accessoire, et un moyen d'entraînement Mt capable de faire fonctionner au moins un organe de l'accessoire susceptible d'être accouplé avec le porte-outil 100.

Le châssis 110 comprend deux flasques Fq verticaux et parallèles entre eux et qui sont réunis par deux barres pare-botte Br1 et Br2 qui s'étendent vers l'extérieur, ainsi que par l'intermédiaire d'une plaque Pq, par exemple fabriquée dans une feuille de tôle et sur laquelle est fixée le moyen d'entraînement Mt. Deux doigts Dt sont également fixés sur les bords inférieurs des deux flasques Fq en s'étendant horizontalement dans une direction perpendiculaire aux deux barres pare-botte Br. Les doigts Dt sont montés, sur ces Figs. 1, dans deux fourreaux et sont fixés par des goupilles de manière à permettre leur remplacement. La plaque de tôle Pq est formée de plusieurs plis pour renforcer la structure du châssis 110. Elle comprend ainsi un pli inférieur formant retour et qui relie les deux fourreaux. Deux tasseaux sont fixés sous ce pli inférieur et servent d'assise au porte-outil pour qu'il puisse reposer sur le sol.

Au moins un montant Mn relie verticalement les deux barres pare-botte Br. Deux montants Mn, présentant une géométrie en équerre, sont interposés sur ces Figs. 1 entre les deux barres Br. Le moyen d'attelage M1 avec l'engin est destiné à solidariser le porte-outil 100 sur le relevage trois points de l'engin porteur. Il comprend deux axes traversant respectivement les deux flasques Fq et une série de trous traversant les deux montants Mn. Un second moyen d'attelage peut être implanté sur le châssis 110, pour atteler le porte-outil 100, par exemple, sur l'extrémité du bras manipulateur d'un engin de levage, communément appelé « télescopique ». Des ferrures peuvent être bridées, à cet effet, sur les deux barres Br, qui servent alors également de moyen d'attelage.

Sur la Fig. 2, la dérouleuse 300 se compose d'un berceau 310 formant châssis, et dans lequel est disposé un moyen de déroulement 320 capable de faire tourner une botte de fourrage cylindrique pour la dérouler afin de la distribuer de manière défaite. Ce moyen de déroulement 320 constitue un organe qui peut être entraîné par le porte-outil 100.

Le berceau 310 comprend deux flancs Fc1, Fc2, parallèles et qui présentent un bord supérieur concave de sorte à pouvoir border la paroi cylindrique de la botte. Ils sont réunis par l'intermédiaire de traverses Tr, pour constituer le châssis porteur de la machine.

Deux embrèvements Bv creusent le bord inférieur d'au moins un flanc pour y réceptionner respectivement les deux doigts Dt du porte-outil 100. Avantageusement, deux traverses Tr prolongent le profil de ces deux embrèvements Bv afin de pouvoir faire porter une partie de la masse de la machine sur ces deux doigts lorsque la dérouleuse 300 est attelée sur le porte-outil 100.

L'organe de déroulement 320 se compose de deux cylindres C1 et C2 tenus entre les deux flancs Fc et autour desquels peut circuler en boucle un moyen de déplacement 330 constitué, sur cette Fig. 2, d'une paire de chaînes réunies à intervalles réguliers par des tasseaux capables de faire tourner la botte, en circulant autour de pignons dont sont pourvus les deux cylindres C1 et C2. Les tasseaux peuvent être pourvus de crampons pour mordre la surface cylindrique de la botte pour mieux l'entraîner à rotation. On remarquera que le brin supérieur des chaînes suit une trajectoire concave, par exemple sur une glissière, pour que la botte demeure positionnée entre les deux cylindres pendant son déroulement.

Une plaque P1 prolonge la paroi cylindrique de l'un C2 des cylindres pour caler d'un bord la botte de fourrage pendant son dévidement de l'autre bord au niveau du cylindre C1.

Le moyen de déplacement 330 peut inclure un tapis roulant sous-jacent aux tasseaux pour éviter que le fourrage déplacé ne retombe par terre, c'est-à-dire en dehors de l'emplacement prévu de son dépôt.

Le moyen d'accouplement M2 se compose d'un attelage mécanique capable de fixer la dérouleuse 300 sur le porte-outil 100 pour qu'elle puisse être portée et déplacée par celui-ci et d'une structure particulière du moyen d'entraînement Mt du porte-outil 100 vis-à-vis de l'accessoire 300, et qui peut être activé pendant l'attelage de l'accessoire de sorte que le porte-outil 100 est en mesure faire fonctionner dans un sens ou dans l'autre, l'organe de déroulement 320 de la dérouleuse, à l'issue de son accouplement.

L'attelage mécanique comprend une paire de crochets Cr fixés sur les flasques Fq du porte-outil 100 et qui peuvent respectivement soulever deux axes Ax solidaires d'un flanc Fc de la dérouleuse 300.

Les axes Ax sont déportés du flanc Fc par l'intermédiaire de goussets Gs, pour permettre leur accrochage par les crochets. Deux coiffes Cf obliques relient également les extrémités libres des deux axes Ac avec le flanc Fc pour les rigidifier et aussi pour guider les crochets Cr pendant le levage du porte-outil 100 afin de faciliter l'attelage de la dérouleuse 300. On remarquera que les crochets et les axes pourraient être inversés, c'est-à-dire que les deux axes solidaires du porte-outil sont retenus pendant son soulèvement dans les deux crochets solidaires de la dérouleuse.

Le moyen d'entraînement Mt comprend, sur les Figs. 1, un moteur Mr et avantageusement un moteur hydraulique susceptible d'être alimenté, par l'intermédiaire de flexibles de raccordement, par une pompe hydraulique dont est pourvu l'engin porteur du porte-outil 100. Le moteur Mr est fixé d'un côté de la plaque Pq. Le moyen d'entraînement Mt comprend encore, sur les Figs. 1, un engrenage Eg1 tenu par l'arbre du moteur Mr.

Un second engrenage Eg2, visible sur la Fig. 2, est agencé pour pouvoir entraîner à rotation, l'un C2 des cylindres de l'accessoire.

Les deux engrenages sont du type à axes parallèles pour faciliter leur engrènement mutuel. Les deux engrenages sont du type à denture droite, ce qui ne génère pas de forces avec des composantes axiales sur les arbres porteurs.

Sur les Figs. 1, le premier engrenage Eg1 est tenu par l'arbre du moteur Mr qui traverse la plaque Pq de sorte qu'il est disposé de l'autre côté de la plaque et plus précisément du côté des doigts Dt pour être tourné vers l'accessoire à accoupler.

De façon plus précise, le moteur Mr est fixé sur une contreplaque Cp assemblée à l'arrière de la plaque Pq et qui est maintenue plaquée contre elle par l'intermédiaire d'un moyen de rappel, tel qu'au moins un ressort Rs. Quatre ressorts disposés aux encoignures de la plaque sont mis en oeuvre sur la Fig. 2. Les ressorts sont précontraints par des vis de fixation de la contreplaque Cp sur la plaque Pq. Ce montage flottant protège l'arbre du moteur Mr des chocs éventuels appliqués sur l'engrenage Eg1.

Sur cette Fig. 2, le second engrenage Eg2 est fixé directement sur l'arbre du cylindre C2 qui traverse le flanc Fc1 en étant monté sur la face extérieure dudit flanc Fc1. Le moteur Mr est fixé sur la plaque Pq de sorte que le premier engrenage qu'il porte puisse être positionné en dessous du second engrenage Eg2, quand l'accessoire 300 est accouplé au porte-outil 100.

Un moyen de guidage du porte-outil 100 vis-à-vis de la dérouleuse 300 agit, pendant l'attelage, dans une direction de levage du porte-outil est qui est perpendiculaire à celle des axes des deux engrenages ou pour le moins à l'axe du premier engrenage. Il comprend la paire de flasques Fq dont les rebords situés sous les crochets Cr constituent une paroi de guidage Pg qui glisse verticalement ou dans une direction quasi verticale, le long du flanc Fc porteur du second engrenage Eg2, pendant l'attelage.

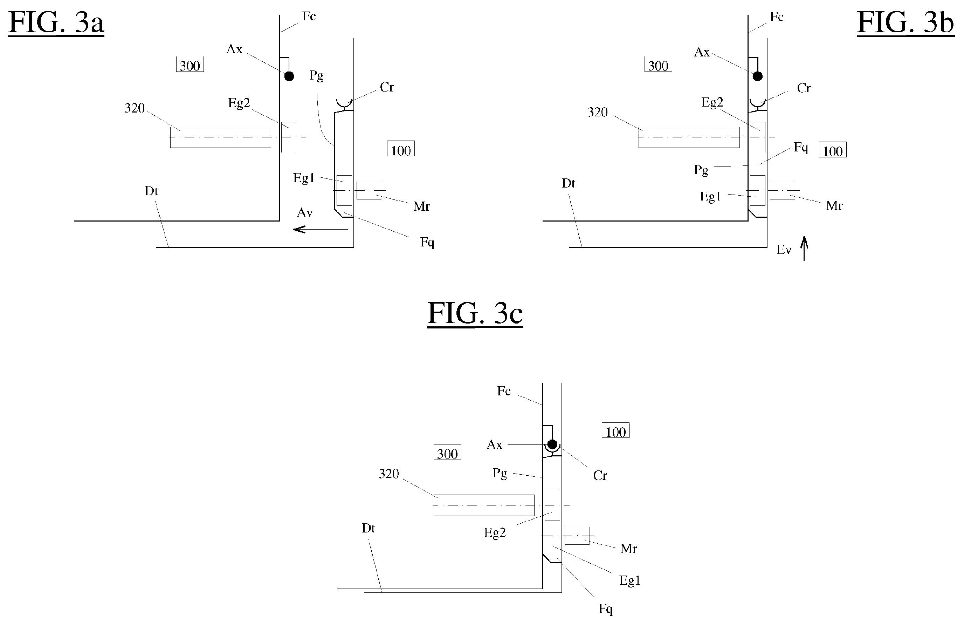

Ainsi, l'attelage de l'accessoire 300 se présente de la manière suivante en référence aux Fig. 3. Le porte-outil 100 est attelé et raccordé à un engin puis est avancé de sorte que ses doigts Dt passent sous la dérouleuse 300 comme le montre la flèche Av sur la Fig. 3a.

Sur la Fig. 3b, la paroi de guidage Pg des flasques Fq est mise en contact sur le flanc Fc de la dérouleuse 300 puis, par un mouvement d'élévation du porte-outil 100 symbolisé par la flèche Ev, les crochets Cr viennent porter les axes Ax pour soulever l'accessoire 300. Les dentures des deux engrenages Eg1 et Eg2 s'engrènent alors mutuellement pendant le mouvement de glissement de la paroi de guidage Pg sur ledit flanc. La paroi de guidage Pg constitue également une butée sur laquelle l'accessoire 300 s'appuie à l'issue de son attelage.

On remarquera qu'il n'est pas nécessaire que la paroi de guidage Pg entre impérativement en contact avec le flanc Fc de l'accessoire pour réaliser l'accouplement de celui-ci avec le porte-outil, compte tenu de l'imprécision de la position relative du porte-outil vis-à-vis de l'accessoire. L'accouplement est obtenu quand les axes Ax sont positionnés dans les crochets Cr, puis, par un soulèvement consécutif du porte-outil 100, l'accessoire 300 est mis en butée par gravité sur la paroi de butée Pg du porte-outil 100.

Le moteur Mr est alors en mesure d'entraîner l'organe de déroulement 320 de la dérouleuse 300, comme cela apparaît sur la Fig. 3c, par l'intermédiaire d'une commande disposée à l'intérieur de la cabine de l'engin porteur.

Compte tenu que l'accessoire 300 est suspendu sur le porte-outil 100, il n'est pas indispensable de les verrouiller mutuellement. Cependant, au moins un verrou Vr, visible sur la Fig. 2 peut être utilisé. Il se compose d'un doigt rotatif et escamotable monté à coulissement dans un fourreau solidaire du porte-outil 100 et qui est terminé par un ergot perpendiculaire. Le doigt peut passer au travers d'un logement réalisé dans le flanc Fc porteur du second engrenage et qui est élargi localement par une fente au travers de laquelle l'ergot peut passer puis ensuite tourner pour réaliser le verrouillage.

Une butée Bt est fixée sur le flanc Fc de la dérouleuse 300 qui est pourvue de l'attelage mécanique et qui est conformée pour prendre appui sur une barre Br2 du porte-outil 100 pour accroître la stabilité de l'attelage. La butée est positionnée à l'extérieur des deux axes Ax. Elle est positionnée en deçà de la position du centre de gravité projetée sur le flanc Fc.

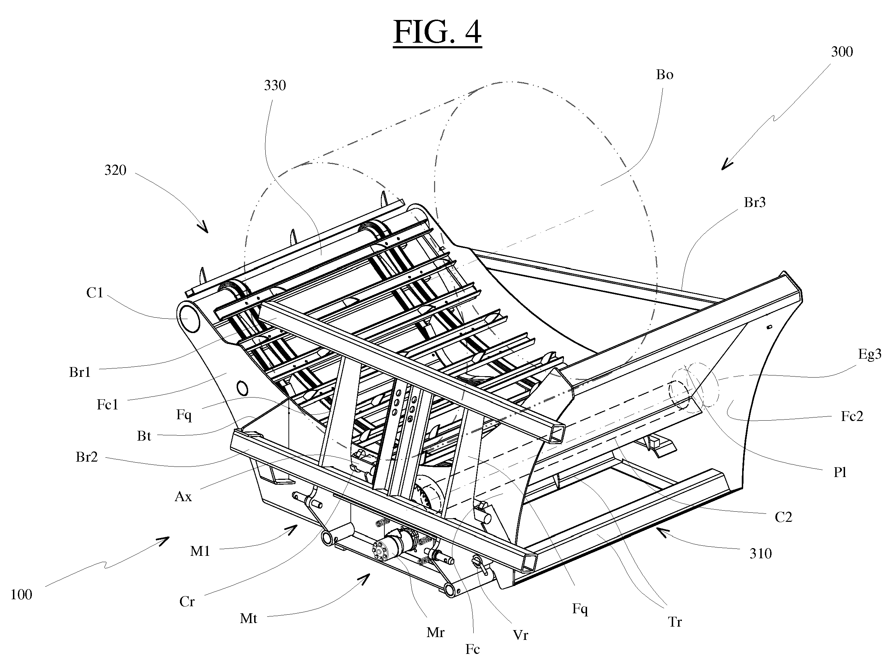

Sur la Fig. 4, la dérouleuse 300 est accouplée au porte-outil 100. Une botte Bo repose sur l'organe de déroulement 320 pour être entraînée à rotation afin d'être déroulée et distribuée, dès lors que le moteur Mr fonctionne. Une autre barre pare-botte Br3 est fixée sur le flanc opposé Fc2 de la dérouleuse 300 pour contenir la botte sur l'organe de déroulage pendant le déplacement de la dérouleuse ou pendant son mouvement.

Le porte-outil 100 de l'invention permet d'atteler rapidement un accessoire. Dès lors que l'accessoire est attelé, il peut être mis en service grâce à l'engrènement de l'engrenage du porte-outil mis en oeuvre automatiquement avec l'engrenage correspondant de l'accessoire, par simple levage du porte-outil.

Sur la Fig. 2, le flanc Fc2 partiellement caché comporte des axes permettant un attelage mécanique, une butée conformée pour prendre appui sur une barre pare-botte Br1 du porte-outil 100. Deux embrèvements creusent le bord inférieur du flanc Fc2. Le cylindre C2 est pourvu également d'un deuxième engrenage Eg3 fixé sur son arbre traversant ledit flanc de sorte à être monté sur la face extérieure dudit flanc Fc2.

Ainsi il est possible d'atteler la dérouleuse 300 par l'un ou l'autre de ses deux flancs Fc1 ou Fc2. La présence de deux engrenages Eg2 et Eg3 sur ses deux flancs Fc1 et Fc2 permet également de faire fonctionner l'organe de déroulement. Le sens de rotation du moteur Mr est réversible. On obtient ainsi une dérouleuse capable de distribuer à droite ou à gauche de l'engin porteur, ce qui accroît sa modularité d'usage. On notera que la barre pare-botte Br3 qui est fixée, par exemple par boulonnage, sur le flanc Fc2 de la dérouleuse est amovible pour pouvoir être fixée sur l'autre flanc C1, selon le côté de prise de la dérouleuse.

Il est utile de préciser que d'autres types d'accessoires peuvent être accouplés sur le porte-outil de l'invention, comme, par exemple, une dérouleuse/pailleuse. Rappelons que schématiquement une dérouleuse/pailleuse est une pailleuse équipée d'un organe capable de déstructurer la matière de la botte pour la projeter, par exemple sur une aire de couchage pour animaux domestiques. L'organe de paillage comprend en principe un rotor ou une turbine ou des disques.

Il faut encore préciser que plusieurs moteurs et leur engrenages correspondants peuvent équiper le porte-outil pour mettre en oeuvre plusieurs fonctions dont est capable l'accessoire accouplé.

## Revendications

1. Porte-outil (100) destiné à être attelé à un engin pour porter un accessoire (300) et faire fonctionner au moins un organe dudit accessoire, comprenant un moyen (M2) d'accouplement avec ledit accessoire, le moyen (M2) d'accouplement incluant un attelage mécanique capable de fixer l'accessoire (300) sur le porte-outil (100) pour qu'il puisse être porté par celui-ci, un moyen d'entraînement (Mt) capable de faire fonctionner ledit organe de l'accessoire, le moyen d'entraînement (Mt) comprenant au moins un moteur (Mr), **caractérisé en ce que** le moteur est adapté pour faire tourner un engrenage (Eg1) porté par ledit porte-outil et destiné à coopérer avec un engrenage (Eg2) de l'accessoire (300) à l'issue de l'attelage mécanique par soulèvement du porte-outil (100).

2. Porte-outil (100) selon la revendication 1, **caractérisé en ce que** le moyen (M2) d'accouplement inclut un moyen de guidage vis-à-vis de l'accessoire et qui comprend une paroi de guidage (Pg) dont la direction (Ev) de guidage vis-à-vis de l'accessoire est perpendiculaire à celle de l'axe dudit engrenage et qui agit, pendant l'attelage, la paroi de guidage (Pg) formant une butée d'appui pour l'accessoire à l'issue de son attelage.

3. Porte-outil (100) selon la revendication 1 ou 2, **caractérisé en ce que** l'attelage mécanique comprend deux crochets (Cr) coopérant avec la paroi de guidage (Pg) positionnée sous les deux crochets (Cr).

4. Porte-outil (100) selon la revendication 3, **caractérisé en ce que** les deux crochets (Cr) sont respectivement fixés sur les deux flasques (Fq) et **en ce que** la paroi de guidage (Pg) est constituée de deux rebords constitutifs de la paire de flasques (Fq).

5. Porte-outil (100) selon l'une quelconque des revendications précédentes, **caractérisé en ce que** le moteur (Mr) est un moteur hydraulique.

6. Porte-outil (100) selon la revendication 5, **caractérisé en ce que** le moteur (Mr) est monté à l'arrière d'une plaque (Pq) constitutive du châssis (110) du porte-outil (100) et dont l'arbre traverse ladite plaque et supporte ledit engrenage (Eg1) disposé de l'autre côté de ladite plaque.

7. Porte-outil (100) selon la revendication 6, **caractérisé en ce que** le moteur (Mr) est fixé sur une contreplaque (Cp) assemblée à l'arrière de la plaque (Pq) et qui est maintenue plaquée contre elle par l'intermédiaire d'un moyen de rappel, tel qu'au moins un ressort (Rs).

8. Porte-outil (100) selon l'une quelconque des revendications précédentes, **caractérisé en ce que** la denture de l'engrenage (Eg1) est du type à axe parallèle.

9. Porte-outil (100) selon l'une quelconque des revendications 6 à 8, **caractérisé en ce qu'**au moins un doigt (Dt) est solidaire du châssis (110) et qui est disposé de sorte à pouvoir piquer une botte (Bo) pour pouvoir la transporter, par exemple, dans un accessoire.

10. Porte-outil (100) selon l'une quelconque des revendications précédentes, **caractérisé en ce qu'**il est associé à un accessoire (300).

11. Porte-outil (100) selon la revendication 10, **caractérisé en ce que** l'accessoire qui lui est associé est une dérouleuse (300) de bottes de fourrage ou une dérouleuse/pailleuse de bottes de fourrage.

12. Porte-outil (100) selon la revendication 11, **caractérisé en ce que** la dérouleuse (300), la dérouleuse/pailleuse, comprend au moins un flanc (Fc1), un engrenage (Eg2) disposé sur la face extérieure dudit flanc (Fc1) pour entraîner un organe (320), deux axes (Ax) solidaires dudit flanc pour respectivement coopérer avec les deux crochets (Cr).

13. Porte-outil (100) selon la revendication 12, **caractérisé en ce que** la dérouleuse (300), la dérouleuse/pailleuse est pourvue d'un second flanc (Fc2) et **en ce qu'**un autre engrenage (Eg3) est disposé sur la face extérieure de l'autre flanc (Fc2) pour entraîner ledit organe, deux axes (Ax) étant solidaires dudit autre flanc pour coopérer avec les deux crochets (Cr).

14. Porte-outil (100) selon la revendication 12 ou 13, **caractérisé en ce que** deux embrèvements (Bv) creusent le bord inférieur d'au moins un flanc (Fc) de la dérouleuse (300), de la dérouleuse/pailleuse, pour y réceptionner respectivement deux doigts (Dt) dont est pourvu le porte-outil (100).

15. Porte-outil (100) selon la revendication 12, 13 ou 14, **caractérisé en ce qu'**une butée (Bt) est fixée sur ledit ou chaque flanc (Fc) de la dérouleuse (300), la dérouleuse/pailleuse, et qui est pourvu de l'attelage mécanique, la butée (Bt) étant positionnée à l'extérieur des deux axes (Ax), en étant conformée pour prendre appui sur une barre (Br) dont est pourvu le châssis (110) du porte-outil (100), pour accroître la stabilité de l'attelage.

16. Porte-outil (100) selon l'une quelconque des revendications 10 à 15, **caractérisé en ce qu'**il comprend un verrou (Vr) adapté pour bloquer l'accessoire (300) dans sa position d'attelage sur le porte-outil (100).

17. Procédé d'accouplement d'un porte-outil (100) avec un accessoire (300), le porte-outil (100) étant destiné à être attelé à un engin pour porter l'accessoire (300) et faire fonctionner au moins un organe dudit accessoire, le porte-outil (100) comprenant un moyen (M2) d'accouplement avec ledit accessoire, le moyen (M2) d'accouplement comprenant un attelage mécanique capable de fixer l'accessoire (300) sur le porte-outil (100) pour qu'il puisse être porté par celui-ci, le porte-outil (100) comprenant en outre au moins un moteur (Mr), **caractérisé en ce que** le moteur (Mr) est adapté pour faire tourner un engrenage (Eg1) porté par ledit porte-outil et **en ce que** le procédé consiste à soulever le porte-outil (100) de sorte à atteler l'accessoire grâce à l'attelage mécanique et à engrener l'engrenage (Eg1) avec un autre engrenage (Eg2, Eg3) porté par l'accessoire (300).

## Patentansprüche

1. Werkzeugrahmen (100) zur Befestigung an einer Maschine zum Stützen eines Zubehörteils (300) und zum Betreiben mindestens eines Elements des Zubehörteils, der ein Mittel (M2) zum Koppeln mit dem Zubehörteil, wobei das Mittel (M2) zum Koppeln eine mechanische Befestigung umfasst, die zum Fixieren des Zubehörteils (300) an dem Werkzeugrahmen (100), so dass es durch ihn gestützt wird, in der Lage ist, ein Antriebsmittel (Mt), das zum Betreiben des Elements des Zubehörteils in der Lage ist, wobei das Antriebsmittel (Mt) mindestens einen Motor (Mr) umfasst, umfasst, **dadurch gekennzeichnet, dass** der Motor zum Drehen eines Zahnrads (Eg1) ausgeführt ist, das von dem Werkzeugrahmen gestützt wird und nach der mechanischen Befestigung durch Heben des Werkzeugrahmens (100) mit einem Zahnrad (Eg2) des Zubehörteils (300) zusammenwirken soll.

2. Werkzeugrahmen (100) nach Anspruch 1, **dadurch gekennzeichnet, dass** das Mittel (M2) zum Koppeln ein Führungsmittel bezüglich des Zubehörteils umfasst, das eine Führungswand (Pg) umfasst, deren Führungsrichtung (Ev) bezüglich des Zubehörteils senkrecht zu der der Achse des Zahnrads ist und die während der Befestigung wirkt, wobei die Führungswand (Pg) einen Anlageanschlag für das Zubehörteil nach seiner Befestigung bildet.

3. Werkzeugrahmen (100) nach Anspruch 1 oder 2, **dadurch gekennzeichnet, dass** die mechanische Befestigung zwei Haken (Cr) umfasst, die mit der Führungswand (Pg) zusammenwirken, die unter den beiden Haken (Cr) positioniert ist.

4. Werkzeugrahmen (100) nach Anspruch 3, **dadurch gekennzeichnet, dass** die beiden Haken (Cr) jeweils an den beiden Seitenteilen (Fq) fixiert sind und dass die Führungswand (Pg) aus zwei Rändern besteht, die Bestandteil des Paars Seitenteile (Fq) sind.

5. Werkzeugrahmen (100) nach einem der vorhergehenden Ansprüche, **dadurch gekennzeichnet, dass** der Motor (Mr) ein Hydraulikmotor ist.

6. Werkzeugrahmen (100) nach Anspruch 5, **dadurch gekennzeichnet, dass** der Motor (Mr) auf der Rückseite einer Platte (Pq) befestigt ist, die Bestandteil des Gestells (110) des Werkzeugrahmens (100) ist, und dessen Welle durch die Platte verläuft und das Zahnrad (Eg1) stützt, das auf der anderen Seite der Platte angeordnet ist.

7. Werkzeugrahmen (100) nach Anspruch 6, **dadurch gekennzeichnet, dass** der Motor (Mr) an einer Gegenplatte (Cp) fixiert ist, die auf der Rückseite der Platte (Pq) montiert ist und durch ein Rückzugmittel, wie mindestens eine Feder (Rs), gegen sie gepresst gehalten wird.

8. Werkzeugrahmen (100) nach einem der vorhergehenden Ansprüche, **dadurch gekennzeichnet, dass** die Verzahnung des Zahnrads (Eg1) vom achsenparallelen Typ ist.

9. Werkzeugrahmen,(100) nach einem der Ansprüche 6-8, **dadurch gekennzeichnet, dass** mindestens ein Finger (Dt) fest mit dem Gestell (110) verbunden ist und dahingehend angeordnet ist, ein Bündel (Bo) durchstechen zu können, um es beispielsweise in ein Zubehörteil transportieren zu können.

10. Werkzeugrahmen (100) nach einem der vorhergehenden Ansprüche, **dadurch gekennzeichnet, dass** er einem Zubehörteil (300) zugeordnet ist.

11. Werkzeugrahmen (100) nach Anspruch 10, **dadurch gekennzeichnet, dass** es sich bei dem ihm zugeordneten Zubehörteil um einen Auflöser (300) für Futterbündel oder einen Auflöser/Einstreuer für Futterbündel handelt.

12. Werkzeugrahmen (100) nach Anspruch 11, **dadurch gekennzeichnet, dass** der Auflöser (300), der Auflöser/Einstreuer, mindestens eine Flanke (Fc1), ein Zahnrad (Eg2), das auf der Außenseite der Flanke (Fc1) zum Antrieb eines Elements (320) angeordnet ist, zwei Bolzen (Ax), die zum jeweiligen Zusammenwirken mit den beiden Haken (Cr) fest mit der Flanke verbunden sind, umfasst.

13. Werkzeugrahmen (100) nach Anspruch 12, **dadurch gekennzeichnet, dass** der Auflöser (300), der Auflöser/Einstreuer, mit einer zweiten Flanke (Fc2) versehen ist und dass ein weiteres Zahnrad (Eg3) auf der Außenseite der anderen Flanke (Fc2) zum Antrieb des Elements angeordnet ist, wobei zwei Bolzen (Ax) zum Zusammenwirken mit den beiden Haken (Cr) fest mit der anderen Flanke verbunden sind.

14. Werkzeugrahmen (100) nach Anspruch 12 oder 13, **dadurch gekennzeichnet, dass** zwei Ausnehmungen (Bv) den unteren Rand mindestens einer Flanke (Fc) des Auflösers (300), des Auflösers/Einstreuers, aushöhlen, um dort jeweils zwei Finger (Dt), mit denen der Werkzeugrahmen (100) versehen ist, aufzunehmen.

15. Werkzeugrahmen (100) nach Anspruch 12, 13 oder 14, **dadurch gekennzeichnet, dass** ein Anschlag (Bt) an der oder jeder Flanke (Fc) des Auflösers (300), des Auflösers/Einstreuers, fixiert ist und der mit einer mechanischen Befestigung versehen ist, wobei der Anschlag (Bt) außerhalb der beiden Bolzen (Ax) positioniert ist und dahingehend angepasst ist, an einer Strebe (Br) anzuliegen, mit der das Gestell (110) des Werkzeugrahmens (100) versehen ist, um die Stabilität der Befestigung zu steigern.

16. Werkzeugrahmen (100) nach einem der Ansprüche 10-15, **dadurch gekennzeichnet, dass** er eine Verriegelungsvorrichtung (Vr) umfasst, die zum Arretieren des Zubehörteils (300) in seiner Befestigungsposition an dem Werkzeugrahmen (100) ausgeführt ist.

17. Verfahren zum Koppeln eines Werkzeugrahmens (100) mit einem Zubehörteil (300), wobei der Werkzeugrahmen (100) an einer Maschine zum Stützen des Zubehörteils (300) befestigt werden und mindestens ein Element des Zubehörteils betreiben soll, wobei der Werkzeugrahmen (100) ein Mittel (M2) zum Koppeln mit dem Zubehörteil umfasst, wobei das Mittel (M2) zum Koppeln eine mechanische Befestigung umfasst, die zum Fixieren des Zubehörteils (300) an dem Werkzeugrahmen (100), so dass es durch ihn gestützt wird, in der Lage ist, wobei der Werkzeugrahmen (100) ferner mindestens einen Motor (Mr) umfasst, **dadurch gekennzeichnet, dass** der Motor (Mr) zum Drehen eines Zahnrads (Eg1) ausgeführt ist, das von dem Werkzeugrahmen gestützt wird, und dass das Verfahren im Heben des Werkzeugrahmens (100), so dass das Zubehörteil durch die mechanische Befestigung befestigt wird und das Zahnrad (Eg1) mit einem anderen Zahnrad (Eg2, Eg3), das vom Zubehörteil (300) gestützt wird, in Eingriff gebracht wird, besteht.

## Claims

1. Tool holder (100) intended to be hitched to a machine for carrying an accessory (300) and operating at least one member of the said accessory, comprising a means (M2) for coupling with the said accessory, the coupling means (M2) including a mechanical hitch capable of fixing the accessory (300) on the tool holder (100) so that it can be carried by the latter, a drive means (Mt) capable of operating the said member of the accessory, the drive means (Mt) comprising at least one motor (Mr), **characterized in that** the motor is adapted to rotate a gear (Eg1) carried by the said tool holder and intended to cooperate with a gear (Eg2) of the accessory (300) following mechanical hitching by raising the tool holder (100).

2. Tool holder (100) according to Claim 1, **characterized in that** the coupling means (M2) includes a means for guiding with respect to the accessory that comprises a guide wall (Pg) of which the guiding direction (Ev) with respect to the accessory is perpendicular to that of the axis of the said gear and which acts during hitching, the guide wall (Pg) forming a bearing stop for the accessory following its hitching.

3. Tool holder (100) according to Claim 1 or 2, **characterized in that** the mechanical hitch comprises two hooks (Cr) cooperating with the guide wall (Pg), which is positioned below the two hooks (Cr).

4. Tool holder (100) according to Claim 3, **characterized in that** the two hooks (Cr) are respectively fixed on the two side pieces (Fq) and **in that** the guide wall (Pg) is formed by two constituent edges of the pair of side pieces (Fq).

5. Tool holder (100) according to any one of the preceding claims, **characterized in that** the motor (Mr) is a hydraulic motor.

6. Tool holder (100) according to Claim 5, **characterized in that** the motor (Mr) is mounted at the rear of a constituent plate (Pq) of the chassis (110) of the tool holder (100) and the shaft of which passes through the said plate and supports the said gear (Eg1) arranged on the other side of the said plate.

7. Tool holder (100) according to Claim 6, **characterized in that** the motor (Mr) is fixed on a counter-plate (Cp) assembled to the rear of the plate (Pq) and held pressed against it via a return means, such as at least one spring (Rs).

8. Tool holder (100) according to any one of the preceding claims, **characterized in that** the toothing of the gear (Eg1) is of the parallel axis type.

9. Tool holder (100) according to any one of Claims 6 to 8, **characterized in that** at least one prong (Dt) is secured to the chassis (110) and is arranged so to be able to prick a bale (Bo) in order to be able to transport it, for example, into an accessory.

10. Tool holder (100) according to any one of the preceding claims, **characterized in that** it is associated with an accessory (300).

11. Tool holder (100) according to Claim 10, **characterized in that** the accessory which is associated with it is a fodder bale unroller (300) or a fodder bale unroller/spreader.

12. Tool holder (100) according to Claim 11, **characterized in that** the unroller (300) or the unroller/spreader comprises at least one flank (Fc1), a gear (Eg2) arranged on the outer face of the said flank (Fc1) to drive a member (320), and two pins (Ax) secured to the said flank in order to respectively cooperate with the two hooks (Cr).

13. Tool holder (100) according to Claim 12, **characterized in that** the unroller (300) or the unroller/spreader is provided with a second flank (Fc2) and **in that** another gear (Eg3) is arranged on the outer face of the other flank (Fc2) to drive the said member, two pins (Ax) being secured to the said other flank to cooperate with the two hooks (Cr).

14. Tool holder (100) according to Claim 12 or 13, **characterized in that** two recesses (Bv) are made in the lower edge of at least one flank (Fc) of the unroller (300) or the unroller/spreader in order to respectively receive therein two prongs (Dt) with which the tool holder (100) is provided.

15. Tool holder (100) according to Claim 12, 13 or 14, **characterized in that** a stop (Bt) is fixed on the said or each flank (Fc) of the unroller (300) or the unroller/spreader that is provided with the mechanical hitch, the stop (Bt) being positioned outside the two pins (Ax) while being configured to bear against a bar (Br) with which the chassis (110) of the tool holder (100) is provided, in order to increase the stability of the hitching.

16. Tool holder (100) according to any one of Claims 10 to 15, **characterized in that** it comprises a lock (Vr) adapted to immobilize the accessory (300) in its hitched position on the tool holder (100).

17. Method for coupling a tool holder (100) with an accessory (300), the tool holder (100) being intended to be hitched to a machine for carrying the accessory (300) and operating at least one member of the said accessory, the tool holder (100) comprising a means (M2) for coupling with the said accessory, the coupling means (M2) comprising a mechanical hitch capable of fixing the accessory (300) on the tool holder (100) so that it can be carried by the latter, the tool holder (100) additionally comprising at least one motor (Mr), **characterized in that** the motor (Mr) is adapted to rotate a gear (Eg1) carried by the said tool holder and **in that** the method consists in raising the tool holder (100) so as to hitch the accessory by means of the mechanical hitch and to engage the gear (Eg1) with another gear (Eg2, Eg3) carried by the accessory (300).
